(19) Europäisches Patentamt

European Patent Office

Office européen des brevets

(11) Publication number: **0 634 298 A1**

(12) **EUROPEAN PATENT APPLICATION**

(21) Application number: **94201762.5**

(22) Date of filing: **21.06.94**

(51) Int. Cl.⁶: **B60G 17/04**

(30) Priority: **12.07.93 IE 9305/14**

(43) Date of publication of application:
**18.01.95 Bulletin 95/03**

(84) Designated Contracting States:
**AT BE CH DE ES FR GB IE IT LI NL PT SE**

(71) Applicant: **KILDALKEY LIMITED**
**39, Northumberland Road,**
**Ballsbridge**

**Dublin 4 (IE)**

(72) Inventor: **Richardson, William Harry**
**Rue du Moulin-Sark**
**Channel Islands (GB)**

(74) Representative: **Mittler, Enrico et al**
**c/o Marchi & Mittler s.r.l.**
**Viale Lombardia, 20**
**I-20131 Milano (IT)**

(54) **Hydrostatic elastic system having variable flexibility for suspensions of road or rail vehicles.**

(57) The hydrostatic elastic system for suspensions of vehicles has a high flexibility at interemediate loads acting on the vehicle and a low flexibility at low and high loads. The system comprises a telescopic upright (1) interposed between body of the vehicle and a wheel, constituted by a cylinder (2) and by a plunging rod (3), and at least two hydropneumatic accumulators (22, 30) forming hydropneumatic springs. With said rod (3) there are associated distributor means (12, 13, 14, 15, 25) capable of placing a chamber (10) of the cylinder (2) in communication with the two accumulators (22, 30) for a given intermediate portion of the stroke of the rod (3) and capable of placing the chamber (10) in communication with one only of said accumulators (22) for given end portions of the stroke of the rod (3).

Fig.1

The present invention relates to a hydrostatic elastic system having variable flexibility for suspensions of road or rail vehicles.

As is known the flexibility of an elastic system constituted by a spring is the ratio between deformation (set) and applied load.

Elastic systems having variable flexibility for suspensions of vehicles can be constituted by springs of the mechanical type or of the pneumatic type.

Springs of the mechanical type can be variable-pitch helical springs having decreasing flexibility as the load increases due to the fact that the turns of the spring are progressively deactivated by the reciprocal contact.

These are springs whose overall strokes, from minimum to maximum loads, are very long and thus have a considerable size. In addition, the law governing the variation of the flexibility is not always the best for the different conditions of a vehicle's load.

Springs of the pneumatic type are constituted by a flexible casing holding a cylindrical casing containing an inert gas, or air, under pressure and have low flexibility at low and high loads and a high flexibility at intermediate loads.

These springs have a very favourable law of the variation of the flexibility, but these again have a considerable size, due to the fact that the flexible casing is not in a position of withstanding high gas pressures.

The object of the present invention is an elastic system with variable flexibility for suspensions of road or rail vehicles, that allows the optimization of the law of variation of the flexibility and has an acceptable size in the area of the body's suspension on the wheel.

According to the invention, such object is attained with a hydrostatic elastic system for suspensions of vehicles provided with a body and with wheels, characterized in that it comprises a telescopic upright interposed between the body of the vehicle and a wheel, constituted by a cylinder and by a plunging rod that holds a disc and is slidable in a chamber of said cylinder for a given stroke, and at least two hydropneumatic accumulators, forming hydropneumatic springs, operationally connected to said cylinder, there being associated with said rod distributor means capable of placing said chamber in communication with said two accumulators for a given intermediate portion of the stroke of the rod and capable of placing said chamber in communication with one only of said accumulators for given end portions of the stroke of the rod, so that said elastic system exhibits a high flexibility at intermediate loads acting on the vehicle and a low flexibility at low and high loads.

With the elastic system according to the invention, having a flexibility that varies with the stroke of the rod, a very favourable law is obtained, suitable for optimizing ride comfort and road-holding qualities of the suspension of the vehicle.

There is further accomplished an elastic system of a limited size, as the two hydropneumatic accumulators exhibit a reduced overall volume and can be mounted in the body of the vehicle in the most suitable position.

Features and advantages of the invention will now be illustrated with reference to embodiments of the invention represented as non-limiting examples in the enclosed drawings, wherein:

Fig. 1 is a diagrammatic representation of a hydrostatic elastic system having variable flexibility accomplished according to the invention;

Fig. 2 shows a partial axial cross-section of an embodiment of the elastic system of Fig. 1;

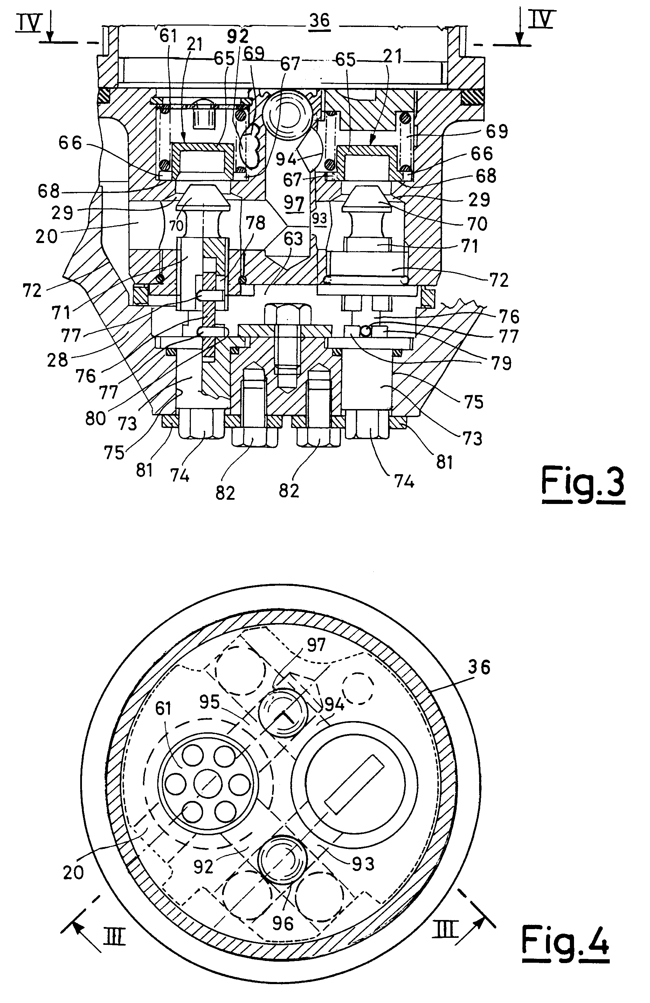

Fig. 3 is a view taken along the plane III-III of Fig. 4;

Fig. 4 is a view taken along the plane IV-IV of Fig. 3;

Fig. 5 is a diagrammatic representation of another embodiment of the elastic system of Fig. 2;

Fig. 6 is an indicative graph that shows the law of variation of the load against the stroke of a rod of a telescopic upright of the elastic system of Fig. 1;

Fig. 7 shows an embodiment of an abutment of a cylinder of Fig. 2.

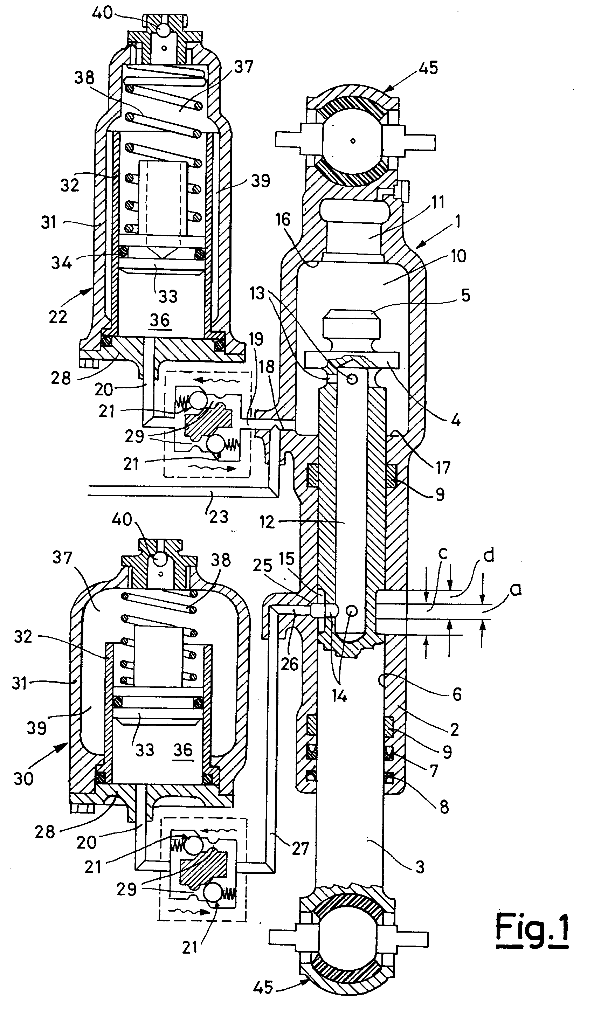

There is indicated in Fig. 1 overall with 1 a telescopic upright of a wheel, not shown, of a road or rail vehicle. The upright 1 comprises a cylinder 2 and a plunging rod 3, provided with a disc-shaped extremity 4 and with a cylindrical head 5. The cylinder 2 and the rod 3 are connected to the body of the vehicle, not shown, and to a wheel of the vehicle by means of a respective spherical articulation indicated overall with 45. In the cylinder 2 there is a cylindrical seat 6, in which the rod 3 is slidable with the interposition of a seal ring 7, with a dust ring 8 and with slide rings 9. In the cylinder 2 there are also a chamber 10 containing oil, in which the disc 4 moves, and a dead hole 11, having a diameter slightly larger than the head 5, so that the latter can enter it with clearance. The rod 3 is provided with an internal cylindrical cavity 12, with radial holes 13 and 14, located at the extremities of the cavity 12, and with an annular groove 15, communicating with the chamber 10.

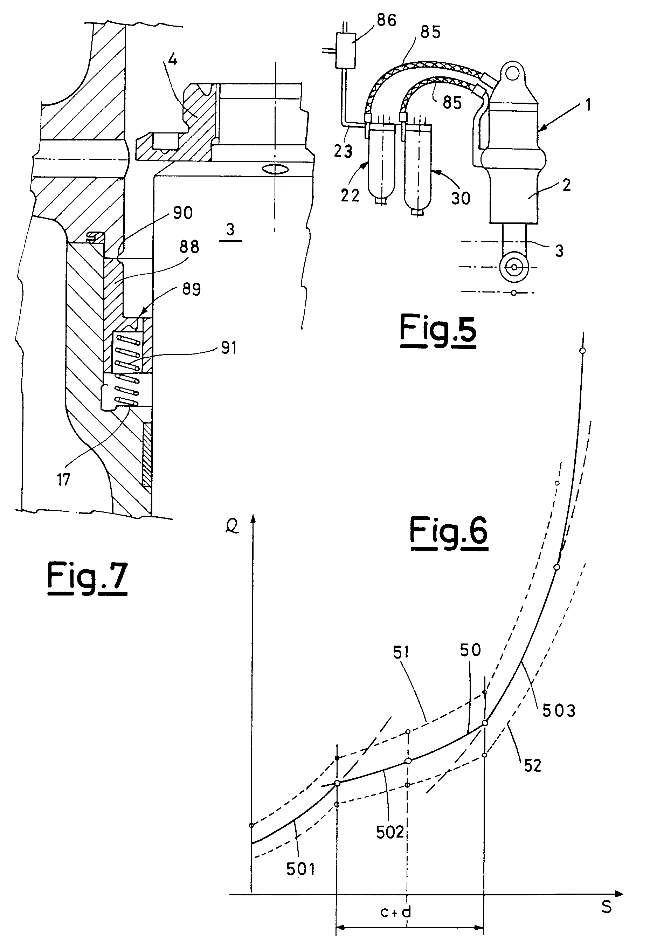

The cylinder 2 has abutments 16 and 17 that act as limit stops for the disc 4. The cylinder 2 is provided with a hole 18, that places the chamber 10 in communication with a conduit 19, in turn connected to a conduit 20 through calibrated ports 29 and two check valves 21 operating in the opposite direction. The conduit 20 is connected to a hydropneumatic accumulator, indicated overall with 22, that forms a hydropneumatic spring. The conduit 19 also communicates with a conduit 23, connected to a height regulator indicated with 86 in Fig. 5, not shown in detail, as it is known. The cylinder 2 is also provided with a further hole 26 communicating with an annular groove 25 and with a conduit 27, connected to a further conduit 20 through further calibrated ports 29 and two further check valves 21 operating in the opposite direction. The further conduit 20 is also connected to a hydropneumatic accumulator indicated overall with 30, that forms a further hydropneumatic spring. Groove 25 and hole 26 put groove 15 of rod 3 in communication with accumulator 30, when rod 3 assumes given positions intermediate between the end limits of its stroke, included in a portion equal to a distance c or equal to a distance d, where c = d, as shown in Fig. 1. The annular groove 15 has a width c + d-a, where distance a represents the width of groove 25.

The calibrated ports 29 can be of the adjustable type, for example by means of adjustment screws.

The accumulator 22 has a casing 31, to which there is flanged a cover 28, containing a liner 32 in which there moves a piston 33, provided with a seal ring 34. The piston 33 separates a chamber 36, containing oil, from a chamber 37, containing an inert gas under pressure, for example nitrogen. A spring 38, used to exert on the oil in chamber 36 a slightly higher pressure than that of the gas in chamber 37, acts on the piston, so as to ensure the oil seal of the ring 34. Between liner 32 and casing 31 there is a cavity 39 full of gas under pressure capable of balancing the liner 32 and prevent it from undergoing deformations. There is indicated with 40 a valve for loading the accumulator.

Accumulator 30 is identical with accumulator 22, except for size, and the corresponding parts are indicated with the same numbers.

During the normal operation of the vehicle, with a subtantially constant load, cylinder 2 and rod 3 assume the position represented in Fig. 1, or rod 3 oscillates round this position, executing displacements that are less than the distance c or than the distance d. Under these conditions groove 25 of width a is always in communication with groove 15 and thus chamber 10 is in communication with accumulators 22 and 30. In particular chamber 10 is connected with accumulator 22 by means of conduits 19 and 20 and check valves 21 and is connected with accumulator 30 by means of holes 13 and 14, cavity 12, grooves 15 and 25, conduits 27, the further conduit 20 and the further check valves 21. Thus the oil contained in chamber 10, acting on rod 3, is subject to the action of the elastic system constituted by the hydropneumatic springs of the two accumulators 22 and 30 and, since the flexibility of the elastic system is a function of the volume of gas contained in the chambers 37 of the two accumulators 22 and 30 and is greater the greater is this volume of gas, it follows that in this situation the elastic system has the maximum flexibility.

But when the length of the upright 1 decreases due to a sudden increase in the load, for example if the wheel passes over an obstacle, or the length increases due to a sudden decrease in the load, for example if the wheel passes over a depression in the road, the rod 3 executes displacements that are greater than the distance c or greater than the distance d and moves towards the outer ends of its stroke. Under these conditions chamber 10 is placed in communication with accumulator 22 only, while communication with accumulator 30 is intercepted, and the flexibility of the elastic system is reduced, since it is a function of the volume of gas in accumulator 22 only. When rod 3 rises upward and approaches the upper limit stop 16, its cylindrical head 5 penetrates in the dead hole 11 with clearance, causing the oil to blow by, so that the movement of the rod 3 is braked.

The operation of the elastic system described is illustrated indicatively in the graph of Fig. 6, wherein the load Q acting on the vehicle is shown along the y-axis and along the x-axis there is shown the displacement s of the rod 3, to which correspond deformations of the elastic system formed by the spring 22 alone or by the two hydropneumatic springs 22 and 30. The continuous curve 50 refers to the vehicle with an average load, the dotted lines 51 and 52 refer to the vehicle under a full load and to the empty vehicle (with just the driver), respectively.

Curve 50 is formed by sections of polytropic (or adiabatic) curves 501, 502 and 503, represented by the function: $Q*V^k$ = constant, derived from the function: $P*V^k$ = constant, where, as is known, $k = 1$ for isothermic transformations, while $k = 1.4$ for adiabatic transformations.

The variables that appear in the preceding functions are: the load $Q = P*\pi*D^2/4$ acting on the rod 3 having a diameter D, that determines a pressure P on the hydropneumatic spring 22 or on the hydropneumatic springs 22 and 30, the volume V either of one chamber 37 alone (outer sections 501 and 503) or of the two chambers 37 (intermediate section 502 corresponding to a displacement of the rod 3 by a distance c + d, where the volume V is variable between a maximum value and a minimum value corresponding to the ends of the stroke of rod 3, respectively). The cotangent of curve 50 represents the flexibility $f = ds/dQ$ of the elastic system formed either by the hydropneumatic spring 22 alone or by the two springs 22 and 30.

Since the flexibility of the elastic system is given by f = ds/dQ, the flexibility of the elastic system formed by the accumulator 22 alone, for a volume V of chamber 37, equals f = V/k*P($\pi$*D²/4)², while the overall flexibility ft of the elastic system formed by the two accumulators 22 and 30, for an overall volume Vt of the two chambers 37, equals ft = Vt/k*P($\pi$*D²/4)².

Thus, curve 50 shows the transformation that takes place in the elastic system formed by the pneumatic spring of the accumulator 22 only or by the two pneumatic springs of the accumulators 22 and 30, when the load varies. It is seen that the elastic system of Fig. 1 exhibits a high flexibility in the intermediate section 502, corresponding to displacements of rod 3 by a distance c + d-a, while it has a low flexibility in sections 501 and 503 corresponding to displacements of rod 3 outside this distance and between the outer ends of its stroke. Curves 51 and 52 are similar to curve 50.

The passage of oil through ports 29, when one or the other of the check valves 21 opens, causes the dampening of the oscillations of the elastic system in the stages of extension and compression of the telescopic upright 1, executing the function of a shock absorber of the suspension of the wheel. If ports 29 are adjustable, the amount of the dampening effect can be varied, so as to allow different types of calibration of the suspensions of the wheels, to adjust them to the requirements of the vehicle.

The adjustment of the height of the body of the vehicle with respect to the wheels, during manœuvres of acceleration, braking, cornering, takes place in the usual manner through the intervention of the height regulator capable of sending or extracting oil to or from chamber 10 through conduit 23.

Each wheel of the vehicle can be equipped with an elastic system like the one described.

Thus, with the elastic system described, ride comfort and road holding qualities of the suspension of the vehicle are optimized.

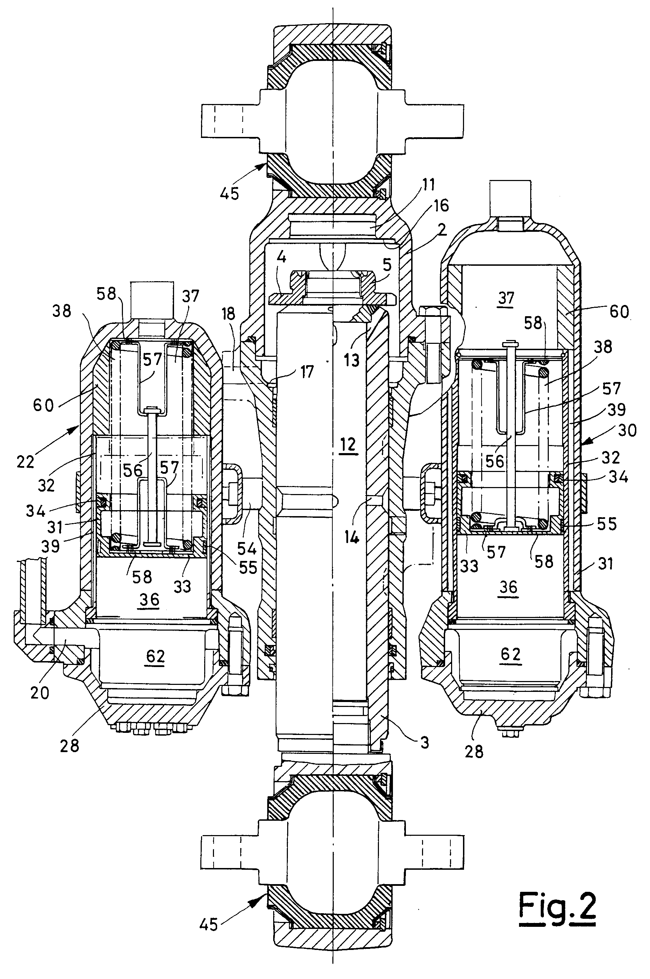

There is represented in Fig. 2 an embodiment of the elastic system of Fig. 1 and the corresponding parts are indicated with the same numbers.

In this case accumulators 22 and 30 are fastened to cylinder 2 of telescopic upright 1 by means of a bracket 54. Piston 33 of the two accumulators is guided in the corresponding liner 32 by slide ring 55 and by a rod 56. Rod 56 is mounted slidable in brackets 57 of two plates 58, held by spring 38 in engagament with piston 33 and with casing 31, in the case of accumulator 22, and with piston 33 and liner 32, in the case of accumulator 30. A respective ring 60 allows the variation of the volume of chambers 37 containing gas under pressure, so that the value of the flexibility of the elastic system may be calibrated. To each casing 31 there is flanged a cover 28 containing a body 62 and a plate 63.

As can also be seen from Fig.s 3 and 4, body 62 holds check valves 21, adjustable ports 29 and conduits for the passage of the oil. The check valves 21 are formed by cup-shaped shutters 65 provided with radial openings 66, obtained in flanges 67, kept in contact with abutments 68 by the action of springs 69. Each valve 21, by means of the respective shutter 65, intercepts the passage in one direction through the port 29 and leaves the passage open through the port 29 in the opposite direction, when a small pressure difference overcomes the limited load of spring 69. Oil flows to chamber 36 through a drilled plate 61 coming from the conduit 20 and a port 29. Oil leaves chamber 36 through drilled plate 61 and flows through 92, 96, 93, a port 29 and through 94, 97, 95, arriving in the conduit 20.

The adjustable ports 29 can be adjusted by means of frustum-shaped valves 70, provided with threaded stems 71 screwed into threaded bushes 72 fastened to body 62. Each stem 71 is caused to rotate by a pivot 73 rotatably supported in a hole 75 of cover 28, by means of a bar 76. Each pivot 73 is provided with a hexagonal part 74 and each bar 76 is provided with radial pawls 77, two of which engage in longitudinal slots 78 of a stem 71, while two other pawls 77 are caused to rotate by small teeth 79 integral with a pivot 73 and are held axially in an annular groove 80 of plate 63. When pivots 73 are made to rotate, valves 70 are displaced with respect to ports 29, so that their passage cross-section increases or decreases and an adjustment is obtained of the dampening effect on the suspension due to the passage of oil. After which the hexagonal sections 74 are fastened angularly by means of plates 81, provided with special hexagonal holes, and screws 82.

In the embodiment of Fig. 5, the two hydropneumatic accumulators 22 and 30 are fastened to the body in a position at some distance from the telescopic upright 1, to which they are operationally connected by means of flexible hoses 85. In this case the height regulating device 86 is connected to accumulator 22 by means of a rigid tube 87.

In the embodiment of Fig. 7 cylinder 2 contains a disc 88 provided with holes 89, interposed between abutment 17 and a further abutment 90 by means of springs 91. With this arrangement, when the disc 4 drops toward the lower limit stop 17, it obstructs holes 89, forcing oil to blow by between the clearances of the fits between rod 3 and cylinder 2. A pressure is thus created that brakes the downward movement of the rod 3. When rod 3 moves upward again, springs 91 raise disc 88 again.

## Claims

1. Hydrostatic elastic system for suspensions of vehicles provided with a body and with wheels, characterized in that it comprises a telescopic upright (1) interposed between the body of the vehicle and a wheel, constituted by a cylinder (2) and by a plunging rod (3) that holds a disc (4) and is slidable in a chamber (10) of said cylinder (2) for a given stroke, and at least two hydropneumatic accumulators (22, 30), forming hydropneumatic springs, operationally connected to said cylinder (2), there being associated with said rod (3) distributor means (12, 13, 14, 15, 25) capable of placing said chamber (10) in communication with said two accumulators (22, 30) for a given intermediate portion of the stroke of the rod (3) and capable of placing said chamber (10) in communication with one only of said accumulators (22) for given end portions of the stroke of the rod (3), so that said elastic system exhibits a high flexibility at intermediate loads acting on the vehicle and a low flexibility at low and high loads.

2. Elastic system according to claim 1, characterized in that said rod (3) is sealingly slidable in a seat (6) of said cylinder (2) and is provided with an internal cavity (12), with radial holes (13, 14) located at the extremities of the cavity (12), and with an annular groove (15), communicating with chamber (10) of said cylinder (2), and said cylinder (2) is provided with a hole (18), that places said chamber (10) in communication with one (22) of said hydropneumatic accumulators through calibrated ports (29) and two check valves (21) operating in the opposite direction, said cylinder (2) being also provided with a further hole (26) communicating with an annular groove (25) and with the other (30) of said hydropneumatic accumulators through further calibrated ports (29) and two further check valves (21), operating in the opposite direction, said groove (25) and hole (26) placing the groove (15) of the rod (3) in communication with said accumulator (30), when the rod (3) assumes given positions intermediate between the outer ends of its stroke.

3. Elastic system according to claim 1, characterized in that each of said accumulators (22, 30) has a casing (31) containing a liner (32) in which there slides a piston (33) provided with a seal ring (34), that separates a chamber (36)

containing oil, from a chamber (37) containing an inert gas under pressure, on said rod (3) there acting a spring (38), capable of exerting on the oil in said chamber (36) a slightly higher pressure than that of the gas in said chamber (37), so as to ensure the oil seal of said ring (34).

4. Elastic system according to claim 3, characterized in that between said liner (32) and casing (31) of each accumulator (22, 30) there is a cavity (39) filled with gas under pressure capable of balancing the liner (32) and prevent it from undergoing deformations.

5. Elastic system according to claim 2, characterized in that said calibrated ports (29) can be adjusted by means of frustum-shaped valves (70), provided with threaded stems (71) screwed into threaded holes (72) of a body (62) contained in a cover (28) flanged to the casing (31) of one of said accumulators (22; 30), each stem (71) being caused to rotate by a pivot (73) rotatably supported in a hole (75) of the cover (28) by means of a bar (76) provided with radial pawls (77), two of which engage in longitudinal grooves (78) of a stem (71), while two other pawls (77) are caused to rotate by teeth (79) integral with said pivot (73) and are held axially in an annular groove (80) of a plate (63) interposed between said body (62) and said cover (28), so that, when the pivots (73) are made to rotate, the valves (70) are axially displaced with respect to said ports (29) and there is an increase or a decrease in their passage cross-section, obtaining an adjustment of the dampening effect of the suspension due to the passage of oil.

# Fig.1

**Fig.2**

**Fig.3**

**Fig.4**

Fig.7

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-2 984 501 (MERCIER)<br>* column 12, line 75 - column 14, line 54; figures 12-15 * | 1 | B60G17/04 |
| X | FR-A-1 334 383 (SFERMA)<br>* page 6, left column, paragraph 5 - page 7, left column, paragraph 2; figure 7 * | 1 | |
| A | EP-A-0 466 628 (MAURO BIANCHI)<br>* column 12, line 12 - column 13, line 7; figures 20-22 * | 1 | |
| A | FR-A-1 283 199 (S.A.M.M.)<br>* figure 1 * | 1,2 | |
| A | EP-A-0 461 981 (MESSIER BUGATTI)<br>* column 2, line 25 - line 38; figures 1,2 * | 1,3 | |
| A | BE-A-671 391 (CITROËN) | | TECHNICAL FIELDS SEARCHED (Int.Cl.6) |
| A | DE-B-10 21 732 (M.A.N.) | | B60G<br>F16F |

The present search report has been drawn up for all claims

| Place of search | Date of completion of the search | Examiner |
|---|---|---|
| BERLIN | 21 October 1994 | Krieger, P |

EPO FORM 1503 03.82 (P04C01)